# EUROPEAN PATENT APPLICATION

(11) **EP 3 393 008 A2**
(43) Date of publication of application: **24.10.2018**
(21) Application number: 18168293.1
(22) Date of filing: 19.04.2018
(51) Int. Cl.: H02J 50/50

(54) **WIRELESS CHARGING DELIVERY MODULE FOR ADAPTING WIRELESS CHARGING TYPE BETWEEN TRANSMITTER AND RECEIVER**

(30) Priority: 19.04.2017 KR 20170050456
(71) Applicant: Center for Integrated Smart Sensors Foundation, Daejeon 34141 (KR)
(72) Inventor: LEE, Kyung Hak, 12022 Namyangju-si (KR); KIM, Young Ki, 35367 Daejeon (KR); CHOI, Jae Hyun, 08521 Seoul (KR); LEE, Hyun Wook, 34118 Daejeon (KR)
(74) Representative: Nederlandsch Octrooibureau

(57) **Abstract**

Disclosed is a wireless charging delivery module used in a wireless charging system. The wireless charging delivery module includes at least one first antenna that receives a power signal in at least one frequency band from at least one transmitter in a radio frequency (RF) scheme, at least one matching unit connected to the at least one first antenna to match and output the power signal in the at least one frequency band, a frequency converter connected to the at least one matching unit to convert the power signal in the at least one frequency band into a power signal in a specific frequency band of the receiver, and a second antenna connected to the frequency converter to transmit the power signal in the specific frequency band to the receiver in one of a magnetic resonance scheme and a magnetic induction scheme.

## Description

### CROSS-REFERENCE TO RELATED APPLICATIONS

A claim for priority under 35 U.S.C. § 119 is made to Korean Patent Application No. 10-2017-0050456 filed on April 19, 2017, in the Korean Intellectual Property Office, the entire contents of which are hereby incorporated by reference.

### BACKGROUND

Embodiments of the inventive concept described herein relate to a wireless charging delivery module used in a wireless charging system that includes a transmitter and a receiver, and more particularly, relate to a wireless charging delivery module that transmits a power signal transmitted from a transmitter to a receiver.

In recent years, as various portable terminals using wireless communication have been widely spread, wireless charging technology for wirelessly charging a portable terminal has also been actively developed.

The wireless charging technology is a technique for charging a portable terminal with a power signal transmitted from a wireless charging transmitter in one of a magnetic induction scheme, a magnetic resonance scheme, and an RF scheme, where a wireless charging receiver is embedded in the portable terminal such that the power signal used for charging the portable terminal is received from the wireless charging transmitter.

In such a conventional wireless charging technology, wireless charging may be performed only when the wireless charging scheme of a transmitter corresponds to that of a receiver. For example, when a transmitter uses an RF scheme and a receiver uses a magnetic induction scheme (or a magnetic resonance scheme), the receiver cannot receive a power signal transmitted from the transmitter so that wireless charging is not performed.

Thus, the following embodiments provide a technology of relaying wireless charging between a transmitter and a receiver which use mutually different wireless charging schemes.

### SUMMARY

Embodiments of the inventive concept provide a wireless charging delivery module that relays wireless charging between a transmitter using an RF scheme and a receiver using a magnetic resonance scheme (or a magnetic induction scheme).

In detail, embodiments of the inventive concept provide a wireless charging delivery module that relays wireless charging between a transmitter and a receiver, where the wireless charging delivery module includes at least one first antenna that receives a power signal in at least one frequency band from at least one transmitter in a radio frequency (RF) scheme, a frequency converter that converts the power signal in the at least one frequency band into a power signal in a specific frequency band and outputs the power signal in the specific frequency band, and a second antenna that transmits the power signal in the specific frequency band to the receiver in one of a magnetic resonance scheme and a magnetic induction scheme.

In this case, embodiments of the inventive concept provide a wireless charging delivery module which is capable of being detachably attached to a receiver.

In addition, embodiments of the inventive concept provide a wireless charging delivery module that relays wireless charging between a transmitter and a receiver, where the wireless charging delivery module includes at least one first antenna that receives a power signal in at least one frequency band from at least one transmitter in a radio frequency (RF) scheme, at least one rectifier that rectifies alternating current (AC) power applied to the power signal in the at least one frequency band into direct current (DC) power, and a connector that transmits the DC power to a charging unit of the receiver.

According to an aspect of an embodiment, a wireless charging delivery module, which is used in a wireless charging system, includes at least one first antenna that receives a power signal in at least one frequency band from at least one transmitter in a radio frequency (RF) scheme, at least one matching unit connected to the at least one first antenna to match and output the power signal in the at least one frequency band, a frequency converter connected to the at least one matching unit to convert the power signal in the at least one frequency band into a power signal in a specific frequency band of a receiver, and a second antenna connected to the frequency converter to transmit the power signal in the specific frequency band to the receiver in one of a magnetic resonance scheme and a magnetic induction scheme.

The wireless charging delivery module may be detachably attached to the receiver.

The second antenna may transmit the power signal in the specific frequency band to the receiver in real time in response to the power signal in the at least one frequency band received from the at least one first antenna.

The wireless charging delivery module may further include a super capacitor arranged between the at least one matching unit and the frequency converter to store and output the power signal in the at least one frequency band.

When the at least one transmitter includes a plurality of transmitters, the at least one first antenna and the at least one matching unit may include a plurality of first antennas and a plurality of matching units corresponding to power signals in a plurality of frequency bands transmitted by the plurality of transmitters.

According to another embodiment of the inventive concept, a wireless charging delivery module, which is used in a wireless charging system, includes at least one first antenna that receives a power signal in at least one frequency band from at least one transmitter in a radio frequency (RF) scheme, at least one matching unit connected to the at least one first antenna to match and output the power signal in the at least one frequency band, at least one rectifier configured to rectify alternating current (AC) power applied to the power signal in the at least one frequency band into direct current (DC) power, and a connector that transmits the DC power output from the at least one rectifier to a charging unit of a receiver.

The wireless charging delivery module may be detachably attached to the receiver.

The wireless charging delivery module may be attached to the receiver such that the connector is electrically connected to the charging unit of the receiver.

The wireless charging delivery module may further include a booster connected to the at least one rectifier to converter the DC power of the power signal in the at least one frequency band into DC power suitable for charging.

When the at least one transmitter includes a plurality of transmitters, the at least one first antenna, the at least one matching unit and the at least one rectifier may include a plurality of first antennas, a plurality of matching units and a plurality of rectifiers corresponding to power signals in a plurality of frequency bands transmitted by the plurality of transmitters, respectively.

According to still another aspect of an embodiment, a wireless charging system includes at least one transmitter based on an RF scheme, a wireless charging delivery module, and a receiver charged in one of a magnetic resonance scheme and a magnetic induction scheme when the wireless charging delivery module is attached to the receiver, wherein the wireless charging delivery module includes at least one first antenna that receives a power signal in at least one frequency band from at least one transmitter in a radio frequency (RF) scheme, at least one matching unit connected to the at least one first antenna to match and output the power signal in the at least one frequency band, a frequency converter connected to the at least one matching unit to convert the power signal in the at least one frequency band into a power signal in a specific frequency band, and a second antenna connected to the frequency converter to transmit the power signal in the specific frequency band to the receiver in one of a magnetic resonance scheme and a magnetic induction scheme.

According to still another aspect of an embodiment, a wireless charging system includes at least one transmitter based on an RF scheme, a wireless charging delivery module, and a receiver charged in one of a magnetic resonance scheme and a magnetic induction scheme when the wireless charging delivery module is attached to the receiver, wherein the wireless charging delivery module includes at least one first antenna that receives a power signal in at least one frequency band from at least one transmitter in a radio frequency (RF) scheme, at least one matching unit connected to the at least one first antenna to match and output the power signal in the at least one frequency band, at least one rectifier that rectifies alternating current (AC) power applied to the power signal in the at least one frequency band into direct current (DC) power, and a connector that transmits the DC power output from the at least one rectifier to a charging unit of a receiver.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a view illustrating a wireless charging system according to an embodiment;
FIG. 2 is a view illustrating a wireless charging delivery module included in the wireless charging system illustrated in FIG. 1;
FIG. 3 is a block diagram illustrating the wireless charging delivery module illustrated in FIG. 2;
FIG. 4 is a view illustrating a wireless charging delivery module according to another embodiment; and
FIG. 5 is a block diagram illustrating the wireless charging delivery module illustrated in FIG. 4.

### DETAILED DESCRIPTION

Hereinafter embodiments of the inventive concept will be described in detail with reference to the accompanying drawings. However, it should be understood that the inventive concept is not limited to the following embodiments. In addition, the same reference numerals used in each drawing represent the same elements.

In addition, terminologies used herein are defined to appropriately describe the exemplary embodiments of the inventive concept and thus may be changed depending on a viewer, the intent of an operator, or a custom. Accordingly, the terminologies must be defined based on the following overall description of this disclosure.

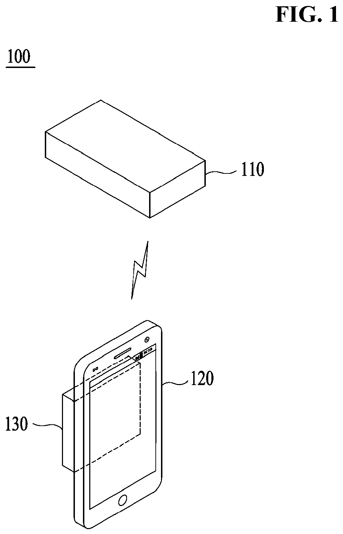

FIG. 1 is a view illustrating a wireless charging system according to an embodiment.

Referring to FIG. 1, a wireless charging system 100 according to an embodiment may be arranged in various spaces (e.g., an indoor space) requiring wireless charging.

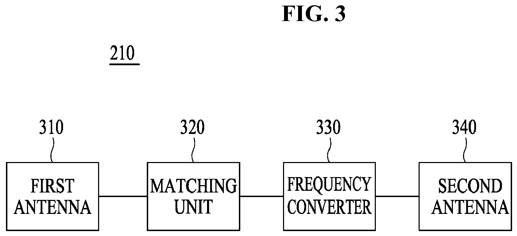

Hereinafter, the wireless charging system 100 including a transmitter 110, a receiver 120, and a wireless charging delivery module 130 will be described, but the embodiment is not limited thereto and the wireless charging system 100 may include a plurality of transmitters instead of one transmitter 110. In this case, the structure of the wireless charging delivery module 130 when the wireless charging system 100 includes one transmitter 110 is different from that of the wireless charging delivery module 130 when the wireless charging system 100 includes the plurality of transmitters. The details will be described below with reference to FIG. 3.

The transmitter 110 transmits a power signal into a space, in which the wireless charging system 100 is arranged, in an RF scheme, and the receiver 120 receives the power signal in one of a magnetic resonance scheme and a magnetic induction scheme so that the wireless charging is performed. In this case, the receiver 120 is illustrated as a portable terminal, but the embodiment is not limited thereto and the receiver 120 means a module installed inside or outside the portable terminal to support wireless charging of the portable terminal.

In this case, since the receiver 120 uses one of the magnetic resonance scheme and the magnetic induction scheme, the receiver 120 cannot directly receive the power signal transmitted from the transmitter 110 in the RF scheme. Thus, while the wireless charging delivery module 130 is attached to the receiver 120, the wireless charging delivery module 130 relays the power signal transmitted from the transmitter 110 to the receiver 120, so that it is possible to perform the wireless charging between the transmitter 110 and the receiver 120.

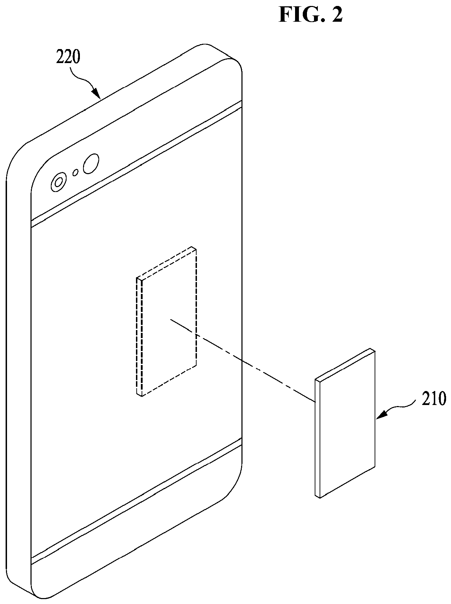

In detail, the wireless charging delivery module 130 may include a first antenna for receiving the power signal transmitted from the transmitter 110 in the RF scheme and a second antenna for transmitting the power signal in the specific frequency band that the receiver 120 can receive, in one of the magnetic resonance scheme and the magnetic induction scheme, thereby relaying the power signal transmitted from the transmitter 110 to the receiver 120. The details will be described below with reference to FIGS. 2 and 3.

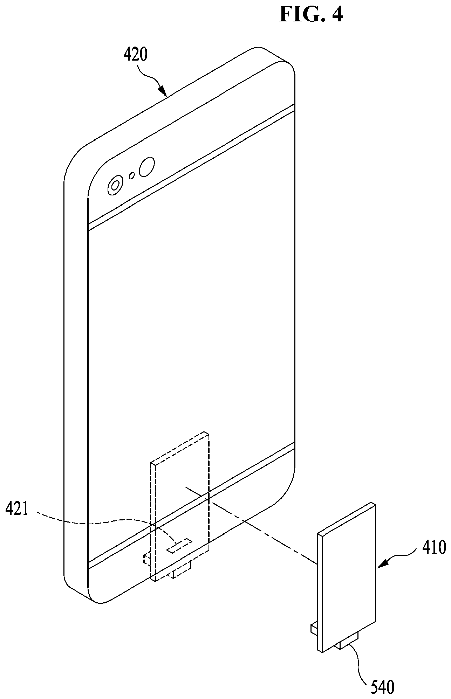

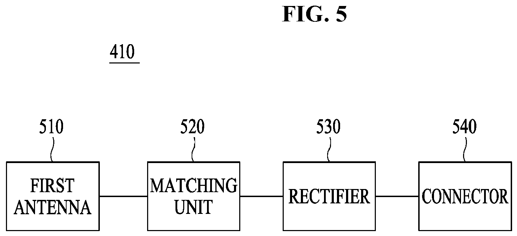

If the receiver 120 is not a terminal supporting wireless charging but a terminal directly connected to support power charging, the wireless charging delivery module 130 may include a rectifier and a connector instead of the second antenna. Thus, after rectifying AC power applied to the power signal transmitted from the transmitter 110 into DC power, the wireless charging delivery module 130 transmits the DC power to a charging unit of the receiver 120, thereby relaying the power signal transmitted from the transmitter 110 to the receiver 120. The details will be described below with reference to FIGS. 4 and 5.

As described above, the wireless charging system 100 according to an embodiment includes the wireless charging delivery module 130, so that it is possible to perform wireless charging between the transmitter 110 and the receiver 120 having different charging schemes.

FIG. 2 is a view illustrating a wireless charging delivery module included in the wireless charging system illustrated in FIG. 1. FIG. 3 is a block diagram illustrating the wireless charging delivery module illustrated in FIG. 2.

Referring to FIGS. 2 and 3, a wireless charging delivery module 210 according to an embodiment, which is included in the wireless charging system (including the transmitter using the RF scheme and a receiver 220 using the magnetic resonance scheme (or the magnetic induction scheme)) described with reference to FIG. 1, includes a first antenna 310, a matching unit 320, a frequency converter 330, and a second antenna 340 to perform a wireless charging delivery operation of transmitting the power signal, which is received from the transmitter, to the receiver 220.

The first antenna 310 receives the power signal from the transmitter in the RF scheme, and the matching unit 320 is connected to the first antenna 310 to match and output the power signal in accordance with a frequency band.

The frequency converter 330 is connected to the matching unit 320 to convert the power signal of the transmitter into the power signal in the specific frequency band (hereinafter, the specific frequency band refers to a frequency band in which the receiver 220 can receive the power signal) of the receiver 220 and output it.

The second antenna 340 is connected to the frequency converter 330 to transmit the power signal in the specific frequency band to the receiver 220 in one of the magnetic resonance scheme and the magnetic induction scheme.

In this case, as soon as the first antenna 310 receives the power signal of the transmitter, the matching unit 320, the frequency converter 330, and the second antenna 340 sequentially operate at very short intervals, such that the power signal of the transmitter may be converted into the power signal in the specific frequency band without being stored and the power signal in the specific frequency band may be transmitted to the receiver 220 in real time. That is, in response to the power signal of the transmitter received from the first antenna 310, the second antenna 340 may transmit the power signal in the specific frequency band to the receiver 220 in real time.

However, the embodiment is not limited to the above, and the wireless charging delivery module 210 may further include a super capacitor (not shown) arranged between the matching unit 320 and the frequency converter 330, such that the wireless charging delivery module 210 converts the power signal of the transmitter into the power signal in the specific frequency band after storing the power signal of the transmitter for a short time and transmits the power signal in the specific frequency band to the receiver 220.

In addition, the super capacitor may be arranged between the frequency converter 330 and the second antenna 340 and may transmit the power signal in the specific frequency band to the receiver 220 after storing the power signal of the transmitter for a short time.

The wireless charging system may include one transmitter or a plurality of transmitters. In this case, the plurality of transmitters may transmit power signals in mutually different frequency bands in the RF scheme, respectively. For example, a first transmitter may transmit a power signal in a first frequency band in the RF scheme and a second transmitter may transmit a power signal in a second frequency band in the RF scheme.

Thus, when the wireless charging system includes the plurality of transmitters, a structure of the wireless charging delivery module 210 may be changed from the structure described above such that the wireless charging delivery module 210 uses all power signals transmitted from the transmitters (not illustrated in the drawings).

In detail, the wireless charging delivery module 210 may include a plurality of first antennas 310 and a plurality of matching units 320 corresponding to power signals in a plurality of frequency bands transmitted from the transmitters. For example, when the plurality of transmitters are included in the wireless charging system, the wireless charging delivery module 210 may include a plurality of first antennas for receiving power signals in a plurality of frequency bands from the transmitters, a plurality of matching units for matching and outputting the power signals in the frequency bands transmitted from the first antennas, the frequency converter 330 for converting the power signals in the frequency bands output from the matching units into power signals in a specific frequency band and outputting the converted power signals, and the second antenna 340 for transmitting the power signals in the specific frequency band to the receiver 220 in the magnetic resonance scheme or the magnetic induction scheme.

In this case, the first antennas may correspond to the frequency band of the power signal transmitted by each of the transmitters and the matching units may correspond to the first antennas. For example, a first first-antenna and a first matching unit are provided to correspond to the first transmitter, such that the first first-antenna may receive a power signal in a first frequency band of the first transmitter to transmit the power signal in the first frequency band to the first matching unit, and the first matching unit may match and output the power signal in the first frequency band. Likewise, a second first-antenna and a second matching unit are provided to correspond to the second transmitter, such that the second first-antenna may receive a power signal in a second frequency band of the second transmitter to transmit the power signal in the second frequency band to the second matching unit, and the second matching unit may match and output the power signal in the second frequency band.

In addition, when a plurality of transmitter are included in the wireless charging system, the wireless charging delivery module 210 may include a plurality of frequency converters and a plurality of second antennas instead of including the one frequency converter 330 and the one second antenna 340.In this case, the frequency converts and the second antennas may be also provided to correspond to power signals in a plurality of frequency bands transmitted by the transmitters (to correspond to the plurality of first antennas and the plurality of matching units).For example, since a first frequency converter and a second first-antenna are provided to correspond to the first matching unit, the first frequency converter may convert the power signal in the first frequency band into the power signal in the specific frequency band of the receiver 220, and the second first-antenna may transmit the power signal in the specific frequency band output from the first frequency converter to the receiver 220. Likewise, since a second frequency converter and a second second-antenna are provided to correspond to the second matching unit, the second frequency converter may convert the power signal in the second frequency band into the power signal in the specific frequency band of the receiver 220, and the second second-antenna may transmit the power signal in the specific frequency band output from the second frequency converter to the receiver 220.

As described above, the wireless charging delivery module 210 according to an embodiment may include the at least one first antenna 310 receiving a power signal in the RF scheme and the second antenna 340 transmitting the power signal in one of the magnetic resonance scheme and the magnetic induction scheme, such that it is possible to perform wireless charging between the transmitter and the receiver 220 which have mutually different charging schemes.

In this case, the wireless charging delivery module 210 may have a structure such that the wireless charging delivery module 210 is detachably attached to the receiver 220. For example, the wireless charging delivery module 210 may be provided on an outside thereof with an attachment unit such that the wireless charging delivery module 210 is attachable to one surface of the receiver 220. Thus, as described above, the wireless charging delivery module 210 may transmit the power signal received from the transmitter to the receiver 220 while being attached to one surface of the receiver 220.

FIG. 4 is a view illustrating a wireless charging delivery module according to another embodiment. FIG. 5 is a block diagram illustrating the wireless charging delivery module illustrated in FIG. 4.

Referring to FIGS. 4 and 5, a wireless charging delivery module 410 according to another embodiment, which is included in the wireless charging system (including a transmitter using the RF scheme and a receiver 420 charged through a direct connection) described with reference to FIG. 1, includes a first antenna 510, a matching unit 520, a rectifier 530, and a connector 540 to perform a wireless charging delivery operation of transmitting the power signal, which is received from the transmitter, to the receiver 420.

The first antenna 510 receives the power signal from the transmitter in the RF scheme, and the matching unit 520 is connected to the first antenna 510 to match and output the power signal in accordance with a frequency band.

The rectifier 530 is connected to the matching unit 520 to rectify AC power applied to the power signal of the transmitter into DC power. For example, the rectifier 530 may rectify AC power into DC power suitable for charging of the receiver 420.

The connector 540 transmits the DC power output from the rectifier 530 to a charging unit of the receiver 420. When the wireless charging delivery module 410 is attached to the receiver 420, the connector 540 may be exposed to an outside of the wireless charging delivery module 410 such that the wireless charging delivery module 410 is electrically connected to the charging unit of the receiver 420.

In this case, as soon as the first antenna 510 receives the power signal of the transmitter, the matching unit 520, the rectifier 530, and the connector 540 sequentially operate at very short intervals, such that the power signal of the transmitter may be rectified into the DC power without being stored and the DC power may be transmitted to the receiver 420 in real time. That is, in response to the power signal of the transmitter received from the first antenna 510, the rectifier 530 and the connector 540 may transmit the DC power to the receiver 420 in real time.

However, the embodiment is not limited to the above, and the wireless charging delivery module 410 may further include a super capacitor (not shown) arranged between the matching unit 520 and the rectifier 530, such that the wireless charging delivery module 410 rectifies the power signal from the transmitter into the DC power after storing the power signal of the transmitter for a short time and transmits the DC power to the receiver 420.

In addition, the super capacitor may be arranged between the rectifier 530 and the connector 540 and may transmit the DC power to the receiver 420 after storing the DC power for a short time.

In addition, although not shown in the drawings, a booster that is connected to the rectifier 530 to convert the rectified DC power into DC power suitable for charging of the receiver 420 may be further included.

The wireless charging system may include one transmitter or a plurality of transmitters. In this case, the plurality of transmitters may transmit power signals in mutually different frequency bands in the RF scheme, respectively. For example, a first transmitter may transmit a power signal in a first frequency band in the RF scheme and a second transmitter may transmit a power signal in a second frequency band in the RF scheme.

Thus, when the wireless charging system includes the plurality of transmitters, a structure of the wireless charging delivery module 410 may be changed from the structure described above such that the wireless charging delivery module 410 uses all power signals transmitted from the transmitters (not illustrated in the drawings).

In detail, the wireless charging delivery module 410 may include a plurality of first antennas510 and a plurality of matching units 520 corresponding to power signals in a plurality of frequency bands transmitted from the transmitters. For example, when the plurality of transmitters are included in the wireless charging system, the wireless charging delivery module 410 may include a plurality of first antennas for receiving power signals in a plurality of frequency bands from the transmitters, a plurality of matching units for matching and outputting the power signals in the frequency bands transmitted from the first antennas, a plurality of rectifiers for rectifying AC power applied to the power signals in the frequency bands output from the matching units into DC power, and a connector 540 for transmitting the DC power output from each of the rectifiers to the charging unit of the receiver 420.

In this case, the first antennas may correspond to the frequency band of the power signal transmitted by each of the transmitters, the matching units may correspond to the first antennas, and the rectifiers may correspond to the matching units. For example, a first first-antenna, a first matching unit and a first rectifier are provided to correspond to the first transmitter, such that the first first-antenna may receive a power signal in a first frequency band of the first transmitter to transmit the power signal in the first frequency band to the first matching unit and the first matching unit may match and output the power signal in the first frequency band. The first rectifier may rectify the AC power of the power signal in the first frequency band into the DC power. Likewise, a second first-antenna, a second matching unit and a second rectifier are provided to corresponding to the second transmitter, such that the second first-antenna may receive a power signal in a second frequency band of the second transmitter to transmit the power signal in the second frequency band to the second matching unit, and the second matching unit may match and output the power signal in the second frequency band. The second rectifier may rectify the AC power of the power signal in the second frequency band into the DC power.

In addition, when a plurality of transmitter are included in the wireless charging system, the wireless charging delivery module 410 may include a plurality of connectors instead of including the one connector 540.In this case, the connectors may be also provided to correspond to power signals in a plurality of frequency bands transmitted by the transmitters (to correspond to the plurality of first antennas, the plurality of matching units and the plurality of rectifiers).For example, since a first connector is provided to correspond to the first rectifier, the first connector may transmit the DC power generated by rectifying the AC power of the power signal in the first frequency band to the charging unit of the receiver 420. Likewise, since a second connector is provided to correspond to the second rectifier, the second connector may transmit the DC power generated by rectifying the AC power of the power signal in the second frequency band to the charging unit of the receiver 420.

As described above, the wireless charging delivery module 410 according to another embodiment may include the at least one first antenna 510 receiving a power signal in the RF scheme, the at least one rectifier 530 rectifying AC power of the power signal of the transmitter, and the connector 540 transmitting the DC power to the charging unit of the receiver 420, such that it is possible to perform wireless charging between the transmitter and the receiver 420 which have mutually different charging schemes.

In this case, the wireless charging delivery module 410 may have a structure such that the wireless charging delivery module 410 is detachably attached to the receiver 420. For example, the wireless charging delivery module 410 may be provided on an outside thereof with an attachment unit such that the wireless charging delivery module 410 is attachable to one surface of the receiver 420. Thus, as described above, the wireless charging delivery module 410 may transmit the power signal received from the transmitter to the receiver 420 while being attached to one surface of the receiver 420.

Specifically, the wireless charging delivery module 410 may be attached to one surface of the receiver 420 such that the connector 540 is electrically connected to the charging unit of the receiver 420. For example, as illustrated in FIG. 4, the wireless charging delivery module 410 may be attached to one surface of the receiver 420 such that a charging terminal 421 of the receiver 420 is electrically connected to the connector 540.

According to the embodiments, there is provided a wireless charging delivery module that relays wireless charging between a transmitter using an RF scheme and a receiver using a magnetic resonance scheme (or a magnetic induction scheme).

In detail, according to the embodiments, there is provided a wireless charging delivery module that relays wireless charging between a transmitter and a receiver, where the wireless charging delivery module includes at least one first antenna that receives a power signal in at least one frequency band from at least one transmitter in a radio frequency (RF) scheme, a frequency converter that converts the power signal in the at least one frequency band into a power signal in a specific frequency band and outputs the power signal in the specific frequency band, and a second antenna that transmits the power signal in the specific frequency band to the receiver in one of a magnetic resonance scheme and a magnetic induction scheme.

In this case, according to the embodiments, there is provided a wireless charging delivery module which is capable of being detachably attached to a receiver.

According to the embodiments, there is provided a wireless charging delivery module that relays wireless charging between a transmitter and a receiver, where the wireless charging delivery module includes at least one first antenna that receives a power signal in at least one frequency band from at least one transmitter in a radio frequency (RF) scheme, at least one rectifier that rectifies alternating current (AC) power applied to the power signal in the at least one frequency band into direct current (DC) power, and a connector that transmits the DC power to a charging unit of the receiver.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Thus, it is intended that the inventive concept covers other realizations and other embodiments of the inventive concept is invention provided they come within the scope of the appended claims and their equivalents.

While the inventive concept has been described with reference to embodiments, it will be apparent to those skilled in the art that various changes and modifications may be made without departing from the spirit and scope of the inventive concept. Therefore, it should be understood that the above embodiments are not limiting, but illustrative.

## Claims

1. A wireless charging delivery module used in a wireless charging system, the wireless charging delivery module comprising:
at least one first antenna configured to receive a power signal in at least one frequency band from at least one transmitter in a radio frequency (RF) scheme;
at least one matching unit connected to the at least one first antenna to match and output the power signal in the at least one frequency band;
a frequency converter connected to the at least one matching unit to convert the power signal in the at least one frequency band into a power signal in a specific frequency band of a receiver; and
a second antenna connected to the frequency converter to transmit the power signal in the specific frequency band to the receiver in one of a magnetic resonance scheme and a magnetic induction scheme.

2. The wireless charging delivery module of claim 1, wherein the wireless charging delivery module is detachably attached to the receiver.

3. The wireless charging delivery module of claim 1, wherein the second antenna transmits the power signal in the specific frequency band to the receiver in real time in response to the power signal in the at least one frequency band received from the at least one first antenna.

4. The wireless charging delivery module of claim 1, further comprising:
a super capacitor arranged between the at least one matching unit and the frequency converter to store and output the power signal in the at least one frequency band.

5. The wireless charging delivery module of claim 1,wherein, when the at least one transmitter includes a plurality of transmitters, the at least one first antenna and the at least one matching unit include a plurality of first antennas and a plurality of matching units corresponding to power signals in a plurality of frequency bands transmitted by the plurality of transmitters.

6. A wireless charging delivery module used in a wireless charging system, the wireless charging delivery module comprising:
at least one first antenna configured to receive a power signal in at least one frequency band from at least one transmitter in a radio frequency (RF) scheme;
at least one matching unit connected to the at least one first antenna to match and output the power signal in the at least one frequency band;
at least one rectifier configured to rectify alternating current (AC) power applied to the power signal in the at least one frequency band into direct current (DC) power; and
a connector configured to transmit the DC power output from the at least one rectifier to a charging unit of a receiver.

7. The wireless charging delivery module of claim 6, wherein the wireless charging delivery module is detachably attached to the receiver.

8. The wireless charging delivery module of claim 7,wherein the wireless charging delivery module is attached to the receiver such that the connector is electrically connected to the charging unit of the receiver.

9. The wireless charging delivery module of claim 6,further comprising:
a booster connected to the at least one rectifier to converter the DC power of the power signal in the at least one frequency band into DC power suitable for charging.

10. The wireless charging delivery module of claim 6,wherein, when the at least one transmitter includes a plurality of transmitters, the at least one first antenna, the at least one matching unit and the at least one rectifier include a plurality of first antennas, a plurality of matching units and a plurality of rectifiers corresponding to power signals in a plurality of frequency bands transmitted by the plurality of transmitters, respectively.
